# EUROPEAN PATENT APPLICATION

(11) **EP 2 175 607 A1**
(43) Date of publication of application: **14.04.2010**
(21) Application number: 08166122.5
(22) Date of filing: 08.10.2008
(51) Int. Cl.: H04L 29/06

(54) **Method for establishing a thin client session**

(71) Applicant: NEC Corporation, Minato-ku Tokyo 108-8001 (JP)
(72) Inventor: Fok Ah Chuen, Frederic, 92100, BOULOGNE-BILLANCOURT (FR)
(74) Representative: Ilgart, Jean-Christophe

(57) **Abstract**

The invention concerns a method for establishing a Thin Client session between a Thin Client device (2) and a Thin Client Server (4) exchanging Handshaking and initialization messages during a session negotiation above a SIP-based framework, wherein said Thin Client device (2) and said Thin Client Server (4) exchange additional information representative of the Thin Client context (30,32) enabling the combination and adaptive transfer of multiple media streams in at least one remote application display during said thin client session.

## Description

### TECHNICAL DOMAIN

The invention pertains to telecommunication field and relates to a new session description to initiate a thin client system working above a SIP-based framework such as IMS.

More specifically, the invention concerns a method for improving the establishment of a Thin Client connection between a thin client device and a thin client server exchanging handshaking and initialization messages during a session negotiation above a Session Initiation Protocol (SIP)-based framework.

The invention concerns also a thin client device and thin client server adapted for implementing said method.

### STATE OF PRIOR ART

The Session Description Protocol (SDP) [IETF RFC4566] is intended for describing multimedia sessions for the purposes of session announcement, session invitation, and other forms of multimedia session initiation. SDP is most commonly used for describing media streams that are transported over the Real-Time Transport Protocol (RTP) [IETF RFC3550], using the profiles for audio and video media defined in RTP Profile for Audio and Video Conferences with Minimal Control [IETF RFC3551]. Besides the MIME Type registration of RTP Payload Formats [IETF RFC3555] defines the RTP payload format for Audio and Video Conferences as MIME subtypes.

However, SDP can be used to describe other media profile than Audio and Video that can be transported over Real-time Transport Protocol (RTP). SDP is commonly carried in Session Initiation Protocol (SIP) [IETF RFC3261] messages in order to agree on a common media description among the endpoints. An Offer/Answer Model with Session Description Protocol (SDP) [IETF RFC3264] defines a framework by which two endpoints can exchange SDP media descriptions and come to an agreement as to which media streams should be used, along with the media related parameters.

In the typical case of a thin client session, it might be desirable to configure and establish media streams for remote desktop/application display as well as for control events over a packet or circuit switched bearer connection. Such session is usually achieved using thin client protocols such as Virtual Network Computing (VNC) based upon Remote Frame Buffer (RFB) Protocol or Remote Desktop Protocol (RDP), but also Independent Computing Architecture protocol (ICA), X11 protocol. Besides, pixels could even be streamed using Real-time Transport Protocol (RTP) and as such graphics primitives would be carried in RTP packets.

In the context of mobility, next generation network, and rich media application, it is important to note that Quality of Service (QoS), adaptivity, and authentication are key points and inspecting the media format is important as well for the resource reservation process and for the operator to control the radio bearer traffic as well as the IP flows (e.g. to apply appropriate resource allocation based on a given policy, user subscription, or service profile). Besides IP Multimedia Subsystem (IMS) - based on SIP and providing an overlay network above a core network - as defined by the Third Generation Partnership Project [3GPP TS 23.228] is also capable to interconnect with a Policy and Charging Control Architecture [3GPP TS 23.203] including the ability to authorize QoS resources.

Since applications range from simple text and/or graphic based application to audio and/or video based application that can suffer from network delays and high gigue ratio, a way to adapt to different types of traffic within a remote desktop control session is required.

From a Service aspect it is foreseen to combine a remote desktop access with other services such as phone call establishment or push-to-x services. By using SIP it becomes possible to extend traditional remote desktop control use cases.

From a QoS aspect it is also desirable to enable QoS control over the thin client media description. For instance Graphics and Events type of media can be allocated a predefined QoS profile, they could even be streamed over a packet or circuit switched bearer connection. Besides when a thin client device is moving, the access network environment may change so it might be desirable to re-allocate the appropriate quality settings (resource allocation, renegotiation of media parameters such as codecs, transport protocol, etc...).

From an authentication perspective, however, the well known thin client protocols use their own set of rules and mechanisms (i.e. a built-in negotiation) to authenticate and establish a connection between a thin client device and a thin client server.

The techniques of the prior art do not provide means to mix and adapt multimedia transfers such as audio/video with/to remote desktop control capabilities above a SIP framework.

The invention aims at adding remote desktop control to existing functionalities in order to negotiate the media within a SIP session and allow adaptive media transfer (i.e. video transfer, audio transfer, ...) pertaining to a session of remote desktop control.

### PRESENTATION OF THE INVENTION

The object of the invention is achieved by a method for establishing a thin client connection between a thin client device and a thin client server exchanging handshaking and initialization messages during a Session negotiation above a Session Initiation Protocol (SIP)-based framework.

According to the invention, said Thin Client device and said Thin Client Server exchange additional information representative of the Thin Client context to enable the combination and adaptive transfer of multiple media streams in at least one remote application display during said thin client session.

The additional information allows both multimedia transfers and remote desktop control capabilities and may consists of Thin Client information formatted in SDP (Session Description Protocol) offer/answer messages or XML-based offer/answer messages embedded in the body of SIP messages.

The remote desktop control capabilities comprise the function consisting of dynamically directing or redirecting graphical updates of at least one remote application from a first device onto a second device.

Said first device may be a mobile communication device and said second device may be a fixed communication device.

According to another aspect of the invention, said remote desktop control capabilities further comprise the function consisting of transferring uplink events, eventually on a separate radio bearer and/or separate IP connection than the one used for the downlink graphical updates. The radio bearer is a Layer 2 service used to transfer user data between User Equipment and radio access network as per 3GPP definition. A separate IP connection can be achieved by allocating different port number or through IP tunneling mechanisms without or with encryption (i.e. IPSec).

The remote desktop control capabilities further comprise function consisting of associating at least one audio/video stream to a session of remote desktop control (i.e. a thin client session).

In one embodiment of the invention, said additional information comprises remote display framebuffer coordinates and size corresponding to said audio/video streams associated to said thin client session. Said framebuffer coordinates and size enable to appropriately position the video rendering above the remote desktop display on the local screen of the device.

Moreover, said additional information allow sending a client request (FramebufferForgetRequest) instructing the server that a specific area on the framebuffer does not require update.

In another embodiment of the invention said additional information comprise window-id attribute and allow sending a client request (WindowUpdate) instructing a server that a graphical area identified by said window-id attribute has been resized, moved or both.

Thanks to the method according to the invention, it is possible to:
- allow the combination of services
- enable control of the display redirection of a remote application from a mobile device,
- enable Quality of Service as well as accurate session control
- enable the use a uniform negotiation to avoid a wide range of specific thin client authentication and media negotiation mechanisms.

Thanks to the invention, the negotiation steps of known protocols such as RFB or ITU T.120 (Data Protocol for multimedia conferencing) are partially or totally replaced by the SDP-based negotiation and new information is provided to allow mixing media traffic for a remote display connection. Negotiating such a thin client connection using the SDP and SIP framework provides flexibility in that the signaling and the control of the thin client session is distinguished from the screen update strategy applied by the previously cited well known thin client protocols. Advantageously the thin client session can benefits from session redirection feature and other well known SIP and SDP extensions.

In addition the thin client connection could be accurately tracked and controlled within the IP Multimedia Subsystem [3GPP TS 23.228] that is standardized by the Third Generation Partnership Project.

In some typical use cases, it might be desirable to send the uplinks user events such as the well known key and mouse events in another radio bearer and/or IP connection than the one in which are sent the graphical updates. By doing so Quality of Service can be applied and a strategy can be made as to regulate the responsiveness of the system, for instance by guaranteeing very high priority to the events bearer. Furthermore, in a mobility context, a mobile device might move from a wireless network area where a high bandwidth packet-switched bearer is available to another area where a Wireless Local Area Network (WLAN) connection with lower bandwidth is available. Therefore, the graphics media may suffer from delay and bandwidth variations. It is therefore desirable to renegotiate the session parameters and this can be done by using SIP and SDP offer/answer model and IMS mobility management procedures.

By using the proposed invention, it is possible to establish an uplink bearer to send user events and a downlink bearer to receive graphical updates. At the Thin Client device it is also possible to define alternative transport protocol to prepare the viewer to adapt to the viewer transmission mode (e.g. To switch from RFB/VNC over TCP protocol to RTP protocol) to enable some portion of screen display where a film is played and to be streamed using RTP while the background is just periodically updated using the RFB protocol. If a viewer does not support an alternative mechanism, it will just not be accepted during the negotiation phase.

The method according to the invention can be implemented with any other SIP and SDP extensions (RFC3108, RFC4975, draft-garcia-mmusic-sdp-cs-01,) without departing from the scope of present invention The method according to the invention is implemented by a thin client device and a thin client server comprising means for exchanging with said thin client server additional information representative of the Thin Client context to enable the combination and adaptive transfer of multiple media streams in at least one remote application display during said thin client session, said additional information consisting of SDP (Session Description Protocol) offer/answer messages Or XML-based offer/answer messages embedded in the body of SIP messages.

Said thin client device may be a Mobile User Equipment comprising an interface to enable a user to register interest in media redirection in order to get notified upon reception of said media redirection, and to send a redirection answer.

Moreover, said Mobile User Equipment is adapted for establishing a separate IP connection for uplink events for triggering the allocation of separate radio bearer for transferring said uplink events on a separate radio bearer than the one used for downlink graphical updates, and for mapping the rendering of audio/video stream(s) to said remote display framebuffer on its screen. Said Mobile User Equipment comprises an interface to enable a user to register interest in media redirection in order to get notified upon reception of said media redirection, and to send a redirection answer.

The invention also concerns a Thin Client Server adapted for implementing the method according to the invention for establishing a Thin Client session with a Thin Client device, said Thin Client Server comprises means for exchanging with said Thin Client device additional information representative of the Thin Client context to enable the combination and adaptive transfer of multiple media streams in at least one remote application display during said thin client session.

The invention allows an extension of the media types defined in ongoing work [draft-garcia-mmusic-sdp-collaboration-00] and defines new thin client media types and attributes.

To do so, the invention proposes to define the Control-Event media type. The existing "Control" media type is used to specify an additional conference control channel for the session. We need to use a different media type to precise a control channel for user events such as pointer or key events.

Finally the invention provides a way to mix multimedia streams with Thin Client remote display streams. The "Grouping of Media Lines in SDP" [IETF RFC3388] provides means to group media streams to express how different media streams within a session relate to each other, more particularly for the purpose of Lip synchronization or Flow identification. It should be noted that the grouping mechanisms depends on the semantic of the "a=group" session-level attribute. So we provide a new semantic for the thin client ("TC") context.

The implementation will be illustrated based on RFB protocol.

### BRIEF DESCRIPTION OF THE FIGURES

The forgoing summary, as well as the following detailed description, will be better understood when read in conjunction with the appended figures illustrating an exemplary embodiment of the invention in which:
- Figure 1 schematically illustrates an IMS-based architecture;
- Figure 2 illustrates a thin client viewer showing a remote desktop consisting of several areas that can dynamically be adapted;
- Figure 3 illustrates a flow chart describing the steps of the method according to the invention
- Figure 4 schematically illustrates a an example of application display redirection according to the invention;

### DESCRIPTION OF A DETAILED EMBODIMENT OF THE INVENTION

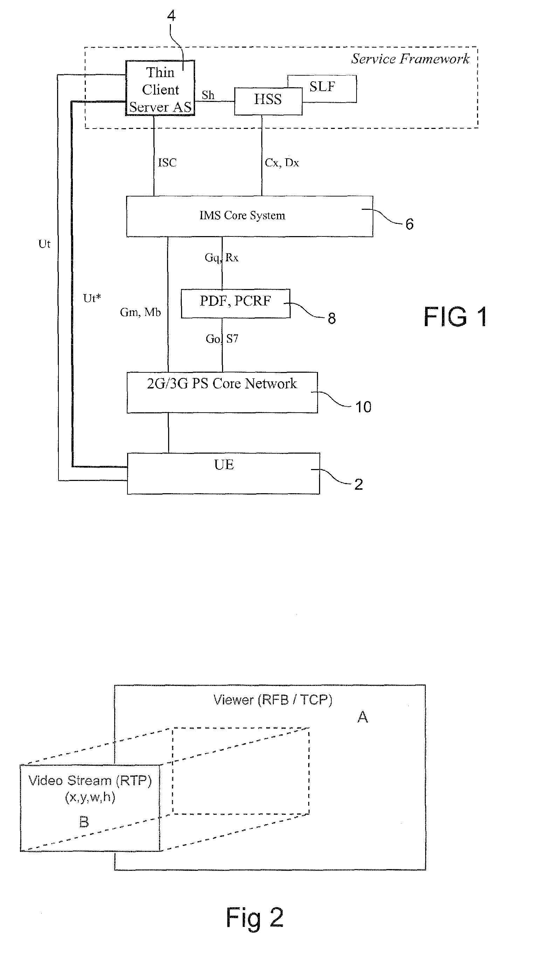

The invention will be described by reference to figure 1 illustrating an IMS architectural framework defined by the third generation partnership project [3GPP TS 23.228] for delivering IP multimedia services to a mobile device. The architecture comprises mobile user equipment 2 acting as a thin client device, a thin client server 4, a IMS Core System 6, a Policy Decision Function module 8 (PDF), a 3GPP Packet Switch (PS) Core Network 10. The IMS Core System 6 mainly comprises a Call Session Control Functions (CSCF) including Proxy-CSCF (P-CSCF), Serving-CSCF (S-CSCF), and Interrogating-CSCF (I-CSCF). The CSCF provides session control for subscribers accessing services within the IM (IP Multimedia) Core System 6. In essence the CSCF is a SIP Server. It has responsibility for interacting with network databases such as the HSS for mobility and AAA (Access, Authorization and Accounting) Servers for security. These modules are required to process SIP signalling packets in the IMS.

IMS Application Servers execute services and interface with S-SCSF. Some interfaces are illustrated in figure 1, as defined in [3GPP 23.228]:
The ISC interface is used to exchange messages between CSCF and thin client server 4.
The Gm interface is used to exchange SIP-based information between UE 2 and CSCF.
The GQ interface is used to exchange information policy decision information between CSCF and Policy Decision Function (PDF).
The interface Cx is intended for the communication between CSCF and Home Subscription Server (HSS) and the interface Dx for finding the correct HSS in multi-HSS environment.
The interface Sh used by the thin client Server 4 for communicating information with the HSS or with SIP/OSA Service Capability Server (OSA/SCS).
The interface Go used to control and authorize the Quality of Service and exchange correlation information between IMS and the 3GPP Policy and Charging Control (PCC) Architecture [3GPP TS 23.203].
The interface Ut used for controlling the Application Server and is based on HTTP protocol.

When using the IMS SIP signaling protocol the Thin Client UE 2 can connect to the IMS Thin Client Application Server (TCAS) 4 as depicted in figure 1 by establishing a SIP session. During this process, the Thin Client UE 2 and the TCAS 4 can negotiate the QoS and media parameters. The UE 2 may also perform some configurations on this TCAS 4 through the Ut interface, for instance to configure the desktop environment. The pixels generated by the application are streamed to the UE 2 in an end-to-end manner via Ut* interface and video or audio media can be streamed to the UE 2 too.

The method according to the invention extends SDP to describe the thin client session, the associated media, and the remote control events. An alternative would be to provide said description using XML syntax as defined by the W3C Extensible Markup Language (XML) 1.0 (Fourth Edition).

More particularly, the method allows the association of at least one audio/video stream to a thin client connection negotiated using SIP signaling in such a way that audio and/or video IP flows can be added dynamically and adaptively to a SIP session of remote desktop control whose associated IP flows can be rendered through thin client protocol mechanisms like RFB.

The following description provides the syntax and semantics of the extensions required for providing a description of a Thin Client session in SDP.

According to SDP [IETF RFC4566], the connection data line in SDP has the following syntax:
c = <nettype> <addrtype> <connection-address>

Where <nettype> indicates the network type, <addrtype> indicates the address type, and the <connection-address> is the connection address, which is dependent on the address type.

Basically the SDP announcement consists of a session-level section followed by one or more media-level sections as described in SDP [IETF RFC2327]. Session-level information provides the default values so if the connection data line is present at the session-level it applies to the media-level section unless the connection data line is conveyed in a media description. Note that if the connection data line is present in all media, it is not required at the session level.

The media description starts with an "m=" line and continues to the next media description or end of the whole session description. The "m=" media line as defined in IETF RFC4566 is as follows
m=<media><port><transport><fmt list>

Where the <media> is the media type, <port> is transport port to which the media stream will be sent, <transport> is the transport protocol whose value is dependent on the "c=" fields, and <fmt list> represents media formats. For audio and video the media formats are normally media payload type as defined in the RTP Audio/Video Profile.

At the moment the media types are defined for audio, video, application, data and control.

Thin client media types.

We initially consider the Remote Frame Buffer (RFB) protocol that can be used to control the display updates and for which various encoding are available.

The media type can be specific to the thin client technology. The media types can be "application/rfb", "application/T120".
m=application <port> <transport> RFB.

We further focus on the Remote Frame Buffer protocol in this document.

Thin client control event media types.

In addition to the graphical updates of the remote display, it is also possible to establish a specific connection for uplink events. For this purpose, the media type "application/control-events" is defined and the media line is:
m = application <port> <transport> control-events.
RFB specific attributes.

The attribute version "v=" must be given and it refers to the RFB protocol version number.
a=v: <version_number>

Where the version_number can be "3.8" meaning that RFB protocol version 3.8 applies.

The client may specify a list of supported encoding types in priority order. The encoding type is indicated in the framebuffer update messages sent by the Thin Client Server. It can be requested by the client to the server in usual RFB specific "setEncoding" messages. The server may or may not use this indication and pixel data may always be sent in raw encoding if required.

The encoding scheme attributes is in the form:
a=encoding-scheme: <encoding scheme value>

Where the <encoding scheme value> can be "RAW", "COPYRECT", "RRE", "HEXTILE", "ZLRE", "CURSOR", "CORRE", "ZLIB", ...

The display number may also be specified. If it is not indicated, then a default port is allocated. Actually the RFB server default port number is usually equal to (5900 + display_number) where display_number usually range from 0 to 6 resulting in 6 possible display connections.

The display attribute is in the form:
a=dpy: <display_number>

In the case of RFB protocol, the following additional attributes are provided.

The client may indicate whether the session is shared or not. If not indicated, the session must not be shared.
a=shared

The server must indicate the framebuffer size:
a=framebuff-w: <the width value>
a=framebuff-h: <the height value>

The client may indicate the following attributes as a preference and the server must indicate those attributes.
○ a=pixformat-bpp: <bit-per-pixel value>
○ a=depth: <depth value>
○ a=big-endian
○ =true-color
○ a=red-max: <red-max value>
○ a=green-max: <green-max value>
○ a=blue-max: <blue-max value>
○ a=red-shift: <red-shift value>
○ a=green-shift: <green-shift value>
○ =blue-shift: <blue-shift value>

For the sake of interoperability, the client and server behavior regarding the understanding of those previous attributes is same as specified in RFB specification 3.8 except that the Handshaking messages and initialization messages are replaced by SDP offer/answer messages.

TC semantic.

A viewer application that receives a session description that contains "m" lines that are grouped together using the TC semantics MUST display and associate a remote desktop control protocol (e.g. RFB) with corresponding media streams like RTP audio/video streams.
a=group:TC

Then the media-level attribute "a=mid:" must be used in each media line that belongs to a group.

For appropriate rendering of the remote display, the media line(s) corresponding to RTP streams (e.g. for video transfer) indicate further display location that is relative to the remote display frame buffer coordinates and size. With this information the thin client device is aware of the location of where should be rendered the RTP video stream on the remote desktop framebuffer. The client can therefore adapt the framebuffer update strategy. Particularier in the case of RFB where framebuffer updates are client-driven, the polling intervals can be adjusted as well as which portion of the remote desktop display should be updated.
a=area-x: <x position value>
a=area-y: <y position value>
a=area-w: <width value>
a=area-h: <height value>
It may also indicate the win-id attribute
a=wind-id: <window identifier>

Such win-id must be unique within a user session for remote desktop control. Use of this id is further explained in the next section.

RFB protocol extensions for window specific management on the framebuffer

RFB graphical update strategy is a client-driven screen update. In RFB specification 3.8, the client can request the update of portion of the whole screen to save bandwidth.

By introduction of the combination of video traffic in addition to framebuffer updates, the client can receive and map a video onto a dedicated portion of the screen.

For instance on a limited screen device such as a mobile phone, the client may decide to resize the video buffer to fit the whole mobile device screen. In such a case the client stops refreshing the framebuffer used for the RFB framebuffer update messages. We will call this specific framebuffer "desktop framebuffer" (desktop FB).

In another foreseen use case, the client receives the graphical update of a media player opened in a dedicated window. Then the client may freely move the video on top of the remote desktop framebuffer locally on its device, and the player may be shown or hidden upon user request. The problem in this situation is that the window movement might need to be indicated to the server for appropriate rendering and screen display management, more particularly if the desktop is shared among multiple users. For instance a first user may control the desktop while other participants may only see the resulting actions of said first user.

In practice the RTP video stream will be received and handled on a separate framebuffer. By introducing the ability to associate a video media to remote desktop capabilities, and by adding the win-id information, the client is able to freely handle the video media rendering on its screen (performing a rotation, switch to fullscreen mode, etc...) while still being associated to the same user session. The Win-id does not necessarily refer to a window but can also refer to a graphical area though in practice it might be easier to implement it using a window, more particularly if said window is likely to be resized or moved. Two new client requests are then defined:
The FramebufferForgetRequest (message-type, window-id, x-position, y-position, width, height) that tells the server that a specific area on the framebuffer does not require update. This is likely to happen if this area is refreshed by another media stream (e.g. H263 encoded video transported over RTP).
The WindowUpdate (message-type, window-id, x-position, y-position, width, height) that tells the server that a received media stream corresponding to a window (or graphical area) opened on the server has been resized, moved, or both.
Those client requests must not be used if no window-id exists, i.e. if no independent media stream corresponding to a window is received.

This also require the server to send the attribute "a=win-id" to indicate whether the media stream received matches a window on the server. If not, the win-id attribute is set to zero and if the attribute is not present the client must not correlate the media stream to a window.

When the media stream does not relate to any windows on the remote server, the client must not resize or move the media on the framebuffer so the WindowUpdate must not be used. However, in a poll model (or client driven framebuffer update) the client may use the FramebufferForgetRequest message in order to inform the server not to update the area specified in the request. However, in a push model, this may not be required as the server should already know that this area is updated using another protocol and encoding.

When the media stream relates to a window on the remote server, the above client requests (FramebufferForgetRequest and WindowUpdate) are used to update the position of the window on the remote server. The window-id information in the FramebufferForgetRequest enables the client to modify the area indication for which the server will not send any framebuffer updates.

Figure 2 illustrates a thin client viewer rendering a remote application display (remote desktop) consisting of several areas that can be dynamically adapted. The Area A is the background of the remote desktop that is graphically updated based on RFB protocol. The other areas are dependant upon the area A such as the area B is illustrated.

The area B is the area of the screen located at (x,y) position relative to area A (X, Y Base coordinates). It is also characterized by it width (w) and height (h) dimensions. The graphical output is streamed over Real Time Protocol (RTP) and encoded for instance using H263 codec.

Any user interaction on the area B can therefore be associated to the remote desktop (background) and pointer events from Area B can be sent to the remote server as if they were performed on Area
A. This can be used when the area B is locally resized or moved on the thin client device' screen without necessarily triggering window resizing and movement at the server.

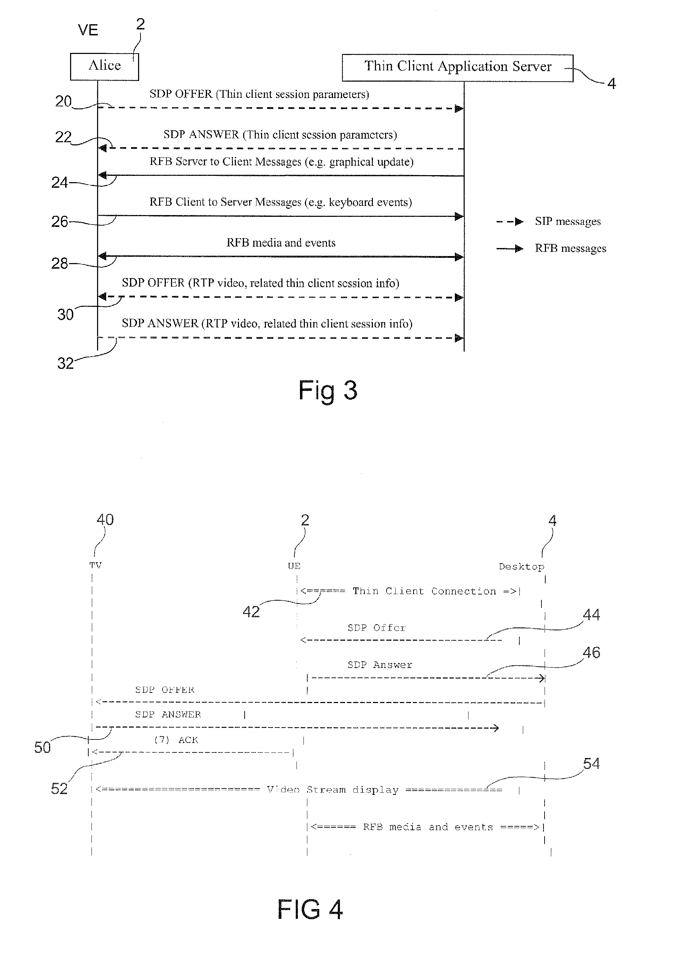

Figure 3 illustrates a thin client connection establishment between a UE 2 acting as thin client device and a remote desktop PC acting as a thin client server 4.

The UE 2 connects through an IP access network for communicating with the remote desktop PC 4 and initiates a SDP Offer/Answer containing thin client parameters including Graphics encoding scheme, the transport settings (RFB (remote framebuffer), RDP (Remote Desktop Protocol), ICA (Independent Computing Architecture protocol), or pixels/RTP (Real-time Transport Protocol), IP Addresses and port number and radio bearer settings (Packet switched or Circuit Switched connection).

At step 20, the UE 2 transmits to the Desktop 4 the SDP offer comprising Thin client session attributes and further parameters required for the appropriate SIP session establishment.

Upon reception of said SDP offer, the Desktop 4 determines that the UE 2 wishes to establish a thin client connection using RFB protocol, determines that RFB protocol and proposed attributes are acceptable based on the environment where the UE 2 is located and, at step 22, sends back a SDP Answer Message indicating the RFB and attributes are selected.

The UE 2 and the Desktop 4 agree the direction for the transfer of graphical updates and events. In addition, they identify that the thin client connection pertains to the ongoing session between them.

After the thin client connection parameters are agreed on both side, the Desktop 4 sends to the UE 2, at step 24, the graphical updates message while said UE 2 sends, at step 26, uplink keys and pointer events to the Desktop 4.

The Desktop 4 may refuse a connection and can thereby set the port number corresponding to the Graphic or Event Stream to zero, as specified in IETF RFC3264.

If some thin client parameters are unknown from the Desktop 4, the later silently ignores such parameters, as specified in IETF RFC4566.

At step 28, the UE 2 and the Desktop 4 exchange RFB media and events.

At step 30, the user opens a media player to view a video and the Desktop 4 sends a second SDP Offer that the UE 2 may or may not accept. Actually the Desktop 4 wishes to send the video, for example, over RTP and a renegotiation is triggered with the new SDP Offer including the video parameters information. Since the video output is generated by the desktop media player application, the thin client session identifier and the graphical position information is given so that the UE 2 can display the video stream at the right position. Therefore the video stream is combined to the ongoing thin client session.

At step 32, The UE 2 acknowledges the Offer and sends back an Answer. The desktop 4 adapts the display updates so that the area where the video is streamed is not updated via the thin client protocol.

Figure 4 illustrates an use of the method according to the invention in application display redirection.

This situation may occur, for example, when a user decides to redirect a video that he receives on mobile UE 2 to a TV 40 SIP-connected at a server, for instance at the set-top-box or any other back-end SIP server, and reachable via its public address.

In this case, at step 42, the UE 2 connects to the remote desktop 4 through an IP access network for communicating with the remote desktop PC 4. This also relates to steps 20 22, 24, 26, and 28 in figure 3.

The UE 2 interacts with the desktop by sending key and mouse events. At one moment in time the user opens a media player and decides to play the video.

At step 44 the desktop 4 sends a SDP Offer/Answer to enable streaming the video. This decision is based on a local policy and intelligence as well as on local server interface implementation. In a first embodiment this implies applications hosted on the server to request specific media transfer means to a thin client server module (we call this application aware media transfer adaptation). In a second embodiment this implies the thin client server module to autonomously select the most appropriate transfer means.

Upon reception of this request, the UE 2 sends back, at step 46, an answer to accept or refuse this video stream. In this typical example, the UE 2 supports the redirection feature. The user selects the redirection option and chooses to redirect the video to the TV 40 via the UE 2 User Interface. It is assumed that the mobile phone knows her TV SIP public address or IP address. This means that the thin client device provides a user interface for notifying the user whether to accept the media flow or direct it to another equipment. The Answer message contains the address of the TV and the ID of the application for which the redirection is requested to redirect e.g. the web browser display.

In this case the redirection refers to the display redirection of an application (this can be a web browser, an instant messaging application, a video,).

The Desktop 4 receives the message, interprets the message and prepares to redirect the media to the TV 40. No screen updates corresponding to the area where the video output is located is sent to the UE 2. This requires the Answer message to include an indication as to whether the output stream still is streamed to the mobile device or not.

The media negotiation follows with the TV 40 through SIP if SIP is supported. It may be possible that the desktop 4 negotiates the video transfer via other means.

At step 48, the desktop 4 sends the SDP offer to the TV 40.

At step 50 the SDP Offer is accepted by the TV which sends back a SDP Answer.

At step 52, the UE 2 is notified that the TV 40 accepted the redirection.

Finally, at step 54, the video is displayed on the TV screen 40. The user may continue interacting with the remote desktop 4 using remote desktop control means.

In the above example the TV 40 is preferably SIP-connected at a server, for instance at the set-top-box or any other back-end SIP server, and that it is reachable via its public address.

## Claims

1. Method for establishing a Thin Client session between a Thin Client device (2) and a Thin Client Server (4) exchanging Handshaking and initialization messages during a session negotiation above a SIP-based framework, **characterized in that** said Thin Client device (2) and said Thin Client Server (4) exchange additional information representative of the Thin Client context enabling the combination and adaptive transfer of multiple media streams in at least one remote application display during said thin client session.

2. Method according to claim 1 wherein said additional information consists of Thin Client information formatted in SDP (Session Description Protocol) offer/answer messages.

3. Method according to claim 1 wherein said additional information consists of Thin Client information formatted in XML-based offer/answer messages embedded in the body of SIP messages.

4. Method according to claim 2 or claim 3 wherein said additional information comprises both multimedia transfers and remote desktop control capabilities.

5. Method according to claim 4 wherein said remote desktop control capabilities further comprises dynamically directing or redirecting graphical updates of a remote application from a first device onto a second device.

6. Method according to claim 5 wherein said first device is a mobile communication device and said second device is a fixed communication device.

7. Method according to claim 6 comprising, transferring uplink events on a separate radio bearer than the one used for the downlink graphical updates.

8. Method according to claim 7 comprising transferring uplink events on a separate IP connection that the one used for the downlink graphical updates.

9. Method according to claim 1 comprising, associating at least one audio/video stream to the thin client session.

10. Method according to claim 8 wherein said additional information comprises remote display framebuffer coordinates and size corresponding to said audio/video streams associated to said thin client session.

11. Method according to claim 9 wherein said additional information allows sending a client request (FramebufferForgetRequest) instructing the server that a specific area on the framebuffer does not require update.

12. Method according to claim 11 wherein said additional information comprises window-id attribute.

13. Method according to claim 12 wherein said additional information allow sending a client request (WindowUpdate) instructing a server that a graphical area identified by said window-id attribute has been resized, moved or both.

14. A thin client device (2) adapted for implementing the method according to claim 1 for establishing a Thin Client session with a Thin Client Server (4), **characterized by** means for exchanging with said Thin Client Server (4) additional information representative of the Thin Client context enabling the combination and adaptive transfer of multiple media streams in at least one remote application display during said thin client session, said additional information consisting of SDP (Session Description Protocol) offer/answer messages Or XML-based offer/answer messages embedded in the body of SIP messages.

15. A thin client device (2) according to claim 14 consisting of a Mobile User Equipment comprising an interface to enable a user to register interest in media redirection in order to get notified upon reception of said media redirection, and to send a redirection answer.

16. A thin client device (2) according to claim 14 adapted for establishing a separate IP connection for uplink events, for triggering the allocation of separate radio bearer for transferring said uplink events on a separate radio bearer than the one used for downlink graphical updates, and for mapping the rendering of audio/video stream(s) to said remote display framebuffer on its screen.

17. A Thin Client Server (4) adapted for implementing the method according to claim 1 for establishing a Thin Client session with a Thin Client device (2), **characterized by** means for exchanging with said Thin Client device additional information representative of the Thin Client context enabling the combination and adaptive transfer of multiple media streams in at least one remote application display during said thin client session.
